# EUROPÄISCHE PATENTANMELDUNG

(11) **EP 2 764 944 A1**
(43) Veröffentlichungstag der Anmeldung: **13.08.2014**
(21) Anmeldenummer: 13196026.2
(22) Anmeldetag: 06.12.2013
(51) Int. Cl.: B23D 61/18, B28D 1/12

(54) **Sägeseil und Verfahren zum Herstellen eines Sägeseils**

(30) Priorität: 07.02.2013 DE 102013202040
(71) Anmelder: Mafell AG, 78727 Oberndorf a.N. (DE)
(72) Erfinder: Schellhammer, Karl, 72172 Sulz-Fischingen (DE); Faißt, Rainer, 72175 Dornhan-Weiden (DE)
(74) Vertreter: Manitz, Finsterwald & Partner GbR

(57) **Zusammenfassung**

Ein Sägeseil (11) ist zum Trennen von Werkstücken ausgebildet und weist zwei Seilenden (17a, 17b) auf, die zum Bilden einer geschlossenen Schleife miteinander verbunden sind. Es ist vorgesehen, dass die Seilenden (17a, 17b) miteinander vergossen sind.

## Beschreibung

Die vorliegende Erfindung betrifft ein Sägeseil, das zum Trennen von Werkstücken ausgebildet ist und zwei Seilenden aufweist, die zum Bilden einer geschlossenen Schleife miteinander verbunden sind.

Im Rahmen der Erfindung ist unter einem "Seil" sowohl ein Seil im engeren Sinne, das aus einer Mehrzahl von Einzelfestigkeitsträgern wie z.B. Einzeldrähten oder Einzelfasern besteht, die insbesondere miteinander verdreht sind, als auch ein einziger, einstückiger Festigkeitsträger zu verstehen, der auch als Draht bezeichnet wird.

Seilsägen werden auf verschiedenen Gebieten dazu verwendet, Werkstücke aus Steinmaterial und auch Holz-, Kunststoff- oder Metallteile in einem unterbrechungsfreien Schnitt zu zerteilen. Hierbei kann das als geschlossene Schleife ausgebildete Sägeseil beispielsweise über eine Antriebsrolle und eine Umlenkrolle der Seilsäge umlaufen. Im Gegensatz zu Bandsägen, bei welchen ein flexibles, jedoch grundsätzlich flächig ausgestaltetes Sägeblatt eingesetzt wird, ermöglichen Seilsägen auch das Durchführen von Schnitten mit starken Krümmungen oder abrupten Richtungswechseln. Besonders exakte Schnitte können mit Sägeseilen erzielt werden, welche für einen spanenden Materialabtrag ausgelegt sind, indem sie z.B. mit entsprechenden geometrischen Schneidelementen versehen sind. Eine solche Säge ist beispielsweise in der DE 10 2010 021 954 A1 offenbart.

Um einen zuverlässigen Sägebetrieb zu gewährleisten, muss ein unbeabsichtigtes Lösen der miteinander verbundenen Seilenden sicher verhindert werden. Ein Verknoten oder Verschlingen der Seilenden scheidet jedoch bei den meisten Anwendungen aus, da Knoten oder Schlingen zu viel Platz beanspruchen und nicht glatt durch den Schnittspalt geführt werden können. Aus dem gleichen Grund ist es auch nicht erwünscht, Haken, Ösen oder Seilklemmen an den Seilenden anzubringen. Ein Verschweißen der Enden eines Stahlseils hat sich ebenfalls als ungünstig herausgestellt, da es hier aufgrund der thermischen Belastung zu einer Schwächung oder gar Zerstörung gängiger Stahlseile kommt. Eine weitere Methode zum Verbinden von Seilenden ist das Spleißen, welches jedoch relativ aufwändig ist.

Ein prinzipielles Problem bei der Herstellung von Endlos-Sägeseilen besteht außerdem darin, dass die Seillänge relativ exakt einem Vorgabewert entsprechen muss. Beim Verknoten, Verklemmen oder Verspleißen von Seilenden besteht jedoch kaum Spielraum für eine derart exakte Anpassung der resultierenden Seillänge. Außerdem können solche Verbindungsmethoden keine exakte Positionierung der Verbindungsstelle relativ zu Trennelementen des Seils sicherstellen.

Es ist daher eine Aufgabe der Erfindung, die Herstellung von Sägeseilen und insbesondere das Verbinden zweier Seilenden eines Sägeseils einfacher und zuverlässiger zu gestalten.

Die Lösung der Aufgabe erfolgt durch ein Sägeseil mit den Merkmalen des Anspruchs 1 und insbesondere dadurch, dass die Seilenden miteinander vergossen sind.

Die Seilenden werden also durch eine gießfähige und nachfolgend gehärtete Masse reib- und stoffschlüssig zusammengehalten. Ein Vergießen ist in Abhängigkeit von der verwendeten Gießmasse im Allgemeinen bei einer wesentlich geringeren Temperatur durchführbar als für ein Verschweißen erforderlich wäre, sodass eine Schwächung der Seilfestigkeit durch das Verbindungsverfahren vermieden wird. Zudem reicht eine vergleichsweise geringe Menge an Gießmasse aus, um die Seilenden sicher zusammenzuhalten, sodass die Verbindungsstelle nicht übermäßig viel Platz beansprucht. Weiterhin ist ein Vergießen wesentlich einfacher und kostengünstiger durchführbar als ein Verschweißen, Verknoten oder Verspleißen.

Im Allgemeinen wird bei der Herstellung von Sägeseilen ein einzelner durchgehender Seilstrang bereitgestellt und an seinen beiden Enden zu einer Schleife geschlossen. Die Erfindung erstreckt sich jedoch auch auf eine Konfiguration, bei welcher zwei oder mehr Seilabschnitte zu einer geschlossenen Schleife zusammengesetzt sind, wobei das Vergießen von zwei Seilenden bei der Herstellung mehrmals nacheinander durchgeführt wird.

Die Seilenden können mittels Metallguss, insbesondere Druck- und/oder Spritzguss, und bevorzugt mittels Zinkdruckguss miteinander vergossen sein. Es hat sich herausgestellt, dass eine Metallgussverbindung zum einen relativ einfach durchführbar ist und zum anderen eine ausreichend hohe Verbindungsfestigkeit ermöglicht. Zinkdruckguss-Verfahren zeichnen sich insbesondere durch die vergleichsweise niedrigen Prozesstemperaturen von etwa 400°C aus. Sollten aufgrund der Beschaffenheit des Sägeseils auch höhere Prozesstemperaturen in Frage kommen, so können die Seilenden z.B. auch mittels Aluminiumdruckguss oder Magnesiumdruckguss vergossen sein. Es ist auch möglich, als Gießmaterial ein Kunststoffmaterial zu verwenden, das aus einer oder mehreren Komponenten bestehen kann. Insbesondere kann ein Gießharz verwendet werden.

Eine Ausführungsform der Erfindung sieht vor, dass die Seilenden mit axialer Beabstandung voneinander und/oder koaxial zueinander in einem Gussteil aufgenommen sind. Eine axiale Beabstandung - welche in gewissen Grenzen variabel ist - ist insbesondere bei der Anpassung der Seillänge bzw. der Position der Verbindungsstelle relativ zu Trennelementen an einen Vorgabewert hilfreich. Zudem werden durch eine fehlende Überlappung der Seilenden eine unnötige Verdickung der Verbindungsstelle sowie ein nachteiliger Koaxialitätsversatz vermieden. Eine koaxiale Ausrichtung der Seilenden ermöglicht einen kontinuierlichen, knickfreien Seilverlauf über die Verbindungsstelle hinweg.

Wenigstens eines der Seilenden kann gestaucht und/oder gepilzt sein. Hierdurch kann die Zugfestigkeit der Verbindung erhöht werden, da die durch das Stauchen oder Pilzen gebildete Verdickung am Seilende ein gewaltsames Herausziehen des Seils aus dem Gussteil bedeutend erschwert. Vorzugsweise sind daher beide Seilenden gestaucht und/oder gepilzt.

Es kann weiterhin vorgesehen sein, dass wenigstens eines der Seilenden einen sich in Richtung der freien Endfläche des Seilendes radial erweiternden, vorzugsweise konischen, Halteabschnitt aufweist. Ein solcher Halteabschnitt kann grundsätzlich durch das Seil selbst gebildet sein. Beispielsweise kann durch Stauchen oder Pilzen wie vorstehend beschrieben ein solcher Halteabschnitt erzeugt werden. Es kann aber auch ein am Seilende angebrachtes separates Halteelement einen sich erweiternden Halteabschnitt bilden. Grundsätzlich kann jede radiale Erweiterung - sei sie durch das Seil selbst oder durch ein aufgebrachtes Element gebildet - als Halteabschnitt fungieren. Eine bestimmte Form des Halteabschnitts ist nicht zwingend.

Gemäß einer speziellen Ausführungsform der Erfindung umfasst das Sägeseil ein Trägerseil und mehrere an dem Trägerseil angebrachte Trennelemente, insbesondere Schneidelemente, wobei ein die Seilenden aufnehmendes Gussteil bezogen auf die Seilachse einen größten Außendurchmesser und/oder eine Länge aufweist, welche den größten Außendurchmesser bzw. die Länge der Trennelemente nicht übersteigt. Somit "bemerkt" das Werkstück beim Sägen nichts vom Vorhandensein des Gussteils, da dieses nicht über die Trennelemente hinausragt. Der Schneidspalt wird allein durch die Schneiden der Trennelemente definiert, sodass eine besonders hohe Schnittqualität erzielbar ist.

Um einen unerwünschten Verschleiß durch Einwirkung des Gussteils auf das Werkstück oder auf die Führungsrollen der Seilsäge weiter zu verringern, kann das Gussteil eine abgerundete Form aufweisen.

Eine weitere Ausführungsform der Erfindung sieht vor, dass die Trennelemente in einem einheitlichen Arbeitsabstand voneinander an dem Trägerseil angebracht sind, wobei der Abstand des Gussteils zu den beiden benachbarten Trennelementen jeweils zumindest im Wesentlichen und bevorzugt genau gleich dem Arbeitsabstand ist. Zur Synchronisierung der Antriebs- und Umlenkrollen einer Seilsäge sind diese häufig mit gleichmäßig über den Rollenumfang beabstandeten Aussparungen zur Aufnahme der Trennelemente versehen. Bei einer Anordnung des Gussteils im gleichen Abstand kann dieses ebenfalls in die Aussparungen eingreifen, sodass die Synchronisierung stets gewahrt bleibt.

Das Sägeseil kann eine Struktur aus mehreren Einzelseilfasern oder -drähten aufweisen und insbesondere eine oder mehrere Stahllitzen umfassen. Solche Seile zeichnen sich allgemein durch eine hohe Festigkeit aus. Darüber hinaus ermöglicht das Vorhandensein mehrerer Einzelseilfasern eine Erhöhung der wirksamen Oberfläche des Seilendes, da praktisch jede einzelne Faser bzw. jeder einzelne Draht zur Haftung am Gießmaterial beiträgt. Hierdurch wird eine stärkere Verankerung des Seilendes in der Gießmasse und somit eine festere Verbindung erreicht als dies z.B. bei einem einstückigen Draht möglich wäre. Da die Gießmasse zwischen die einzelnen Festigkeitsträger des Seils eindringen kann, wird eine erheblich vergrößerte Haltefläche genutzt und so eine besonders innige Verbindung zwischen Gießmaterial und Seil erzielt. Dieser Effekt kann bei Bedarf durch gezieltes Ausfransen oder Aufspleißen des Seilendes sogar noch verstärkt werden.

Besonders bevorzugt ist in diesem Zusammenhang ein Stauchen oder Pilzen zumindest eines Endes eines solchen Seils, da hierdurch die wirksame Oberfläche um ein Vielfaches erhöht und eine in besonderem Maße vergrößerte Haltefläche für die Gießmasse geschaffen wird.

Die Erfindung betrifft auch eine Sägevorrichtung mit einem Sägeseil wie vorstehend beschrieben, wenigstens einer motorisch antreibbaren Antriebsrolle, und zumindest einer von der Antriebsrolle beabstandet angeordneten Umlenkrolle für das Sägeseil, wobei das Sägeseil im Sägebetrieb um die Antriebsrolle und die Umlenkrolle umläuft.

Weiterhin betrifft die Erfindung ein Verfahren zum Herstellen eines Sägeseils, bei dem ein zum Trennen von Werkstücken ausgebildetes, zwei Seilenden umfassendes Ausgangsseil bereitgestellt und die Seilenden des Ausgangsseils zum Bilden einer geschlossenen Schleife miteinander verbunden werden.

Erfindungsgemäß werden die Seilenden zum Verbinden miteinander vergossen. Ein solches Vergießen ist einfach und kostengünstig durchführbar und ermöglicht eine reib- und stoffschlüssige Seilverbindung von hoher Zugfestigkeit.

Die Seilenden können mittels Metallguss, insbesondere mittels Druck- und/oder Spritzguss, bevorzugt mittels Zinkdruckguss, miteinander vergossen werden. Ein Metall als Gießmasse ist nicht zwingend. Grundsätzlich ist z.B. auch das Vergießen der Seilenden mittels Kunststoffspritzguss möglich, wobei die Anwendung eines Spritzgußverfahrens nicht zwingend ist. Generell kann erfindungsgemäß in Verbindung mit jedem geeigneten Verfahren ein Kunststoffmaterial als Gießmaterial verwendet werden, insbesondere ein Gießharz.

Die Seilenden werden vorzugsweise zum Vergießen mit einer axialen Beabstandung voneinander platziert. Die axiale Beabstandung kann insbesondere in Abhängigkeit von einer vorgegebenen Seillänge bzw. Relativposition der Verbindungsstelle zu Trennelementen des Seils gewählt werden.

Weiterhin kann die axiale Beabstandung der Seilenden durch einen axialen Abstand zwischen zwei, insbesondere den Seilenden jeweils nächstgelegenen, Trennelementen des Ausgangsseils vorgegeben werden. Hierdurch kann dafür gesorgt werden, dass sich das den Verguss bildende Gussteil exakt in die regelmäßige Anordnung der Trennelemente auf dem Trägerseil einfügt.

Bevorzugt werden die Seilenden zum Vergießen koaxial zueinander ausgerichtet, um einen knickfreien Seilverlauf zu gewährleisten.

Gemäß einer Ausgestaltung der Erfindung werden die Seilenden zum Vergießen in eine Gießform eingebracht. Die Gießform kann insbesondere als mehrteilige Druckguss- oder Spritzgussform ausgebildet sein. Solche Gießformen können, einmal als Werkzeug gefertigt, für eine Vielzahl von Gießvorgängen verwendet werden.

Wenigstens ein Seilende kann vor dem Vergießen gestaucht und/oder gepilzt werden. Ein solches Stauchen oder Pilzen kann relativ schnell und einfach durchgeführt werden, beispielsweise mittels einer Anordnung aus Stempel und Matrize.

Die Erfindung betrifft auch eine Gießform mit wenigstens einem Formkörper, einer in dem Formkörper ausgebildeten Kavität und einem zu der Kavität führenden Angusskanal.

Die Erfindung sieht vor, dass sich ausgehend von der Kavität zwei Seildurchführungen durch den Formkörper hindurch erstrecken. Die Seildurchführungen ermöglichen ein Einlegen des Ausgangsseils in die Gießform derart, dass sich die Seilenden innerhalb der Kavität befinden. Durch Eingießen oder Einspritzen von Gießmasse durch den Angusskanal in die Kavität kann dann ein Verguss der Seilenden bewerkstelligt werden.

Wenigstens eine der Seildurchführungen kann ferner einen Erweiterungshohlraum zum Aufnehmen eines Trennelements eines in die Gießform einzubringenden Sägeseils aufweisen, wobei bevorzugt beide Seildurchführungen einen Erweiterungshohlraum zum Aufnehmen eines Trennelements aufweisen und der axiale Abstand zur Kavität jeweils einem einheitlichen Arbeitsabstand der Trennelemente entspricht. Der Erweiterungshohlraum ermöglicht es nicht nur, ein Seil mit bereits angebrachten Trennelementen in die Gießform einzulegen, sondern dient auch der Positionierung der Seilenden. Der Verbindungsvorgang kann insofern vereinfacht werden, als durch ein Einlegen des dem Seilende nächstgelegenen Trennelements in den Erweiterungshohlraum automatisch sichergestellt ist, dass sich das Seilende selbst in der Kavität befindet.

Weiterbildungen der Erfindung sind auch in den abhängigen Ansprüchen, der Beschreibung sowie der Zeichnung angegeben.

Die Erfindung wird im Folgenden beispielhaft unter Bezugnahme auf die Zeichnungen beschrieben.
- Fig. 1: zeigt eine vereinfachte Seitenansicht einer Sägevorrichtung mit einem erfindungsgemäßen Sägeseil.
- Fig. 2: zeigt eine teilweise Schnittansicht eines erfindungsgemäßen Sägeseils.
- Fig. 3: zeigt eine Gießform, welche zum Herstellen eines erfindungsgemäßen Sägeseils verwendet wird.

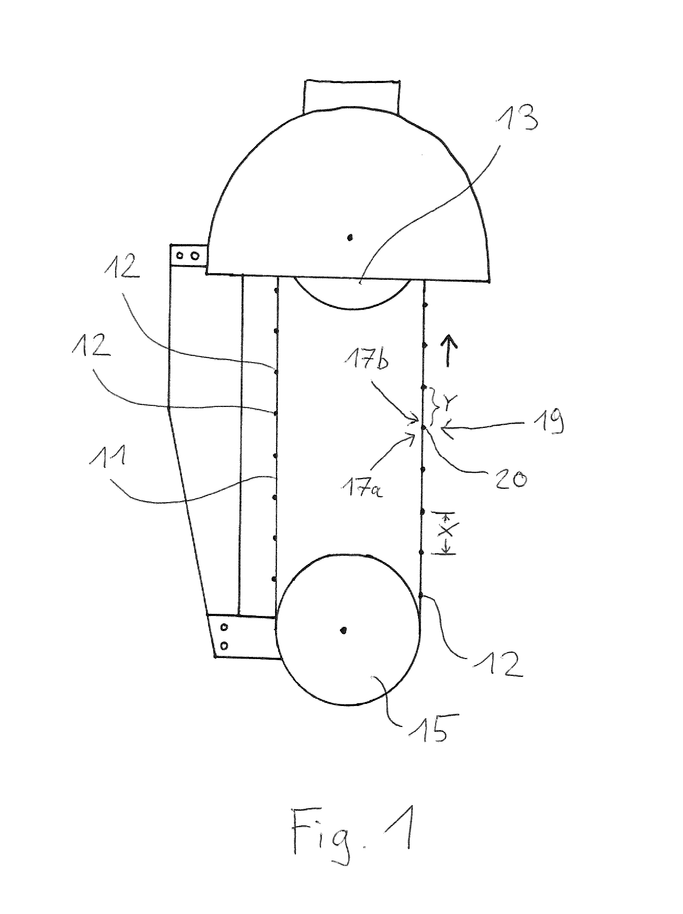

Gemäß Fig. 1 umfasst eine Sägevorrichtung ein Sägeseil 11, welches als geschlossene Schleife ausgebildet ist und während des Sägebetriebs um eine Antriebsrolle 13 und um eine Umlenkrolle 15 umläuft. Das Sägeseil 11 besteht aus einem Trägerseil sowie mehreren identisch ausgeführten und in gleichmäßigem Arbeitsabstand X an dem Trägerseil angebrachten Schneidelementen 12. Um die erforderliche Stabilität und Haltbarkeit zu gewährleisten, ist das Trägerseil vorzugsweise ein feingliedriges Drahtseil von beispielsweise 1,5 mm Durchmesser. Die Schneidelemente 12 sind aus gehärtetem Stahl hergestellt und weisen Schneiden auf, die vorzugsweise bezüglich der Seilachse rotationssymmetrisch sind, sodass sie isotrop schneiden.

Das Sägeseil 11 ist in jeweiligen nicht dargestellten Nuten der Antriebsrolle 13 und der Umlenkrolle 15 geführt, wobei zusätzlich Aussparungen zum Aufnehmen der Schneidelemente 12 in den Nuten vorgesehen sein können. Vorzugsweise sind die Antriebsrolle 13 und die Umlenkrolle 15 aus schwer zerspanbarem Kunststoff hergestellt und austauschbar. Die Sägevorrichtung kann entweder fest installiert sein oder für einen Handbetrieb ausgelegt sein und dementsprechend geeignete Handgriffe aufweisen.

Das Sägeseil 11 ist aus einem einzelnen durchgehenden Seilstrang gebildet, dessen zwei Seilenden 17a, 17b an einer Verbindungsstelle 19 miteinander vergossen sind. Der Abstand Y der Verbindungsstelle 19 zu den beiden benachbarten Schneidelementen 12 ist hierbei jeweils gleich dem Arbeitsabstand X.

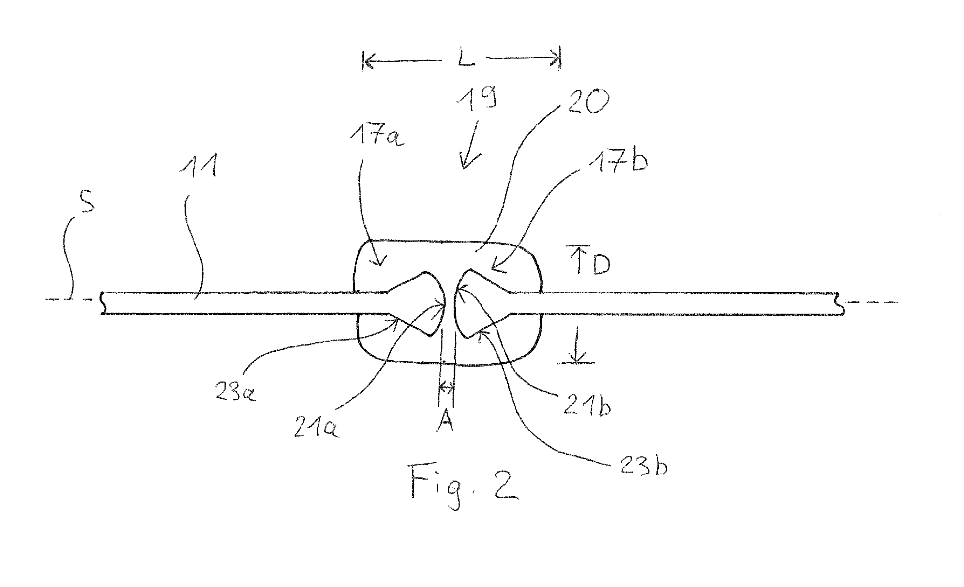

Speziell sind die Seilenden 17a, 17b, wie aus Fig. 2 hervorgeht, in koaxialer Anordnung in einem Gussteil 20 aus Zink aufgenommen. Das Gussteil 20 weist eine bezüglich der Seilachse S rotationssymmetrische, abgerundete Form auf. Alternativ ist auch eine kantige Form möglich, beispielsweise eine Quaderform. Der Außendurchmesser D des Gussteils 20 entspricht höchstens dem maximalen Außendurchmesser der Schneidelemente 12 (Fig. 1), sodass also das Gussteil 20 in radialer Richtung nicht über die Abmessungen der Schneidelemente 12 hinausragt und somit während des Sägens glatt durch den Schnittspalt geführt werden kann. Ebenso entspricht die Länge des Gussteils 20 der Länge der Schneidelemente 12, sodass das Gussteil 20 gegebenenfalls in für die Schneidelemente 12 vorgesehenen Aussparungen der Antriebsrolle 13 oder der Umlenkrolle 15 aufnehmbar ist.

Aus Fig. 2 geht auch hervor, dass die freien Endflächen 21 a, 21 b der Seilenden 17a, 17b axial um einen Endflächenabstand A voneinander entfernt sind. Weiterhin sind die Seilenden 17a, 17b gestaucht und daher endseitig verdickt. Insbesondere weist jedes der Seilenden 17a, 17b einen sich in Richtung der freien Endfläche 21a, 21b erweiternden Halteabschnitt 23a, 23b auf, welcher im dargestellten Beispiel konisch ist. Die Halteabschnitte 23a, 23b dienen der besseren Verankerung der Seilenden 17a, 17b im Gussteil 20 und sorgen insbesondere bei Verwendung eines Seils im engeren Sinne, das aus mehreren Einzelfestigkeitsträgern besteht, für eine insgesamt vergrößerte Oberfläche und somit Haltefläche für das Gießmaterial.

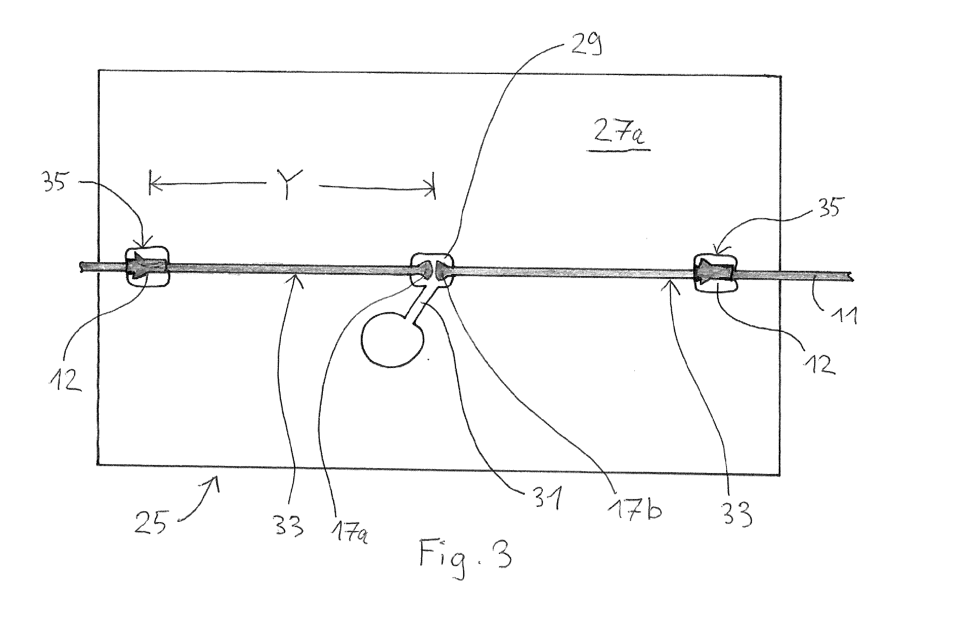

Zur Herstellung eines wie vorstehend beschriebenen Sägeseils 11 wird ein zwei Seilenden 17a, 17b umfassendes Ausgangsseil bereitgestellt und mittels eines Metallgussverfahrens, bevorzugt eines Zinkdruckgussverfahrens, unter Verbindung der beiden Seilenden 17a, 17b zu einer geschlossenen Schleife geformt. Hierzu kommt eine Gießform 25 zum Einsatz, welche in Fig. 3 vereinfacht dargestellt ist.

Die Gießform 25 weist in grundsätzlich bekannter Weise einen zweiteiligen Formkörper, von dem in Fig. 3 lediglich die untere Hälfte 27a gezeigt ist, auf dessen Innenseite man in Fig. 3 blickt. eine in dem Formkörper ausgebildete Kavität 29 und einen zu der Kavität 29 führenden Angusskanal 31 auf. Zusätzlich sind jedoch zwei gegenüberliegende Seildurchführungen 33 in dem Formkörper, welche sich ausgehend von der Kavität 29 koaxial zueinander durch den Formkörper hindurch erstrecken. Jede der Seildurchführungen 33 weist einen Erweiterungshohlraum 35 auf, welcher derart dimensioniert ist, dass ein Schneidelement 12 gerade darin Aufnahme findet. Der axiale Abstand Y der Kavität 29 zum jeweiligen Erweiterungshohlraum 35 ist gleich dem einheitlichen Arbeitsabstand X der Schneidelemente 12 auf dem Trägerseil.

Zum Verbinden der Seilenden 17a, 17b werden die betreffenden Seilabschnitte bei geteiltem Formkörper in die Seildurchführungen 33 eingelegt, wobei dafür gesorgt wird, dass sich die beiden letzten Schneidelemente 12 jeweils in den Erweiterungshohlräumen 35 befinden. Die Seilenden 17a, 17b befinden sich in diesem Fall in koaxialer Ausrichtung und mit axialer Beabstandung in der Kavität 29. Der Formkörper wird dann unter Zusammenführung der einzelnen Teile geschlossen und es erfolgt ein Einbringen von geschmolzenem Zink oder einer geschmolzenen Zinklegierung unter Druck in die Kavität 29. Nach Erstarren des Zinks oder der Zinklegierung wird der Formkörper wieder geöffnet und das fertige endlose Sägeseil 11 einschließlich des erzeugten Gussteils 20 wird entnommen. Der Formkörper kann dann erneut zur Verbindung zweier weiterer Seilenden 17a, 17b verwendet werden.

Insgesamt ermöglicht die Erfindung das zuverlässige und schnelle Verbinden der Seilenden 17a, 17b eines Sägeseils 11, ohne hierbei eine unerwünscht große Seilverdickung im Bereich der Verbindungsstelle 19 in Kauf nehmen zu müssen.

### Bezugszeichenliste

- 11: Sägeseil
- 12: Schneidelement
- 13: Antriebsrolle
- 15: Umlenkrolle
- 17a, 17b: Seilende
- 19: Verbindungsstelle
- 20: Gussteil
- 21a, 21b: freie Endfläche
- 23a, 23b: Halteabschnitt
- 25: Gießform
- 27a: Formkörper-Hälfte
- 29: Kavität
- 31: Angusskanal
- 33: Seildurchführung
- 35: Erweiterungshohlraum

- S: Seilachse
- D: Durchmesser des Gussteils
- L: Länge des Gussteils
- A: Abstand der Endflächen
- X: Arbeitsabstand der Schneidelemente
- Y: Abstand zwischen Gussteil und Schneidelement

## Patentansprüche

1. Sägeseil (11), das zum Trennen von Werkstücken ausgebildet ist und zwei Seilenden (17a, 17b) aufweist, die zum Bilden einer geschlossenen Schleife miteinander verbunden sind,
**dadurch gekennzeichnet, dass**
die Seilenden (17a, 17b) miteinander vergossen sind.

2. Sägeseil nach Anspruch 1,
**dadurch gekennzeichnet, dass**
die Seilenden (17a, 17b) mittels Kunststoffguss, bevorzugt mittels eines Gießharzes, oder mittels Metallguss, insbesondere Druck- und/oder Spritzguss, bevorzugt mittels Zinkdruckguss, miteinander vergossen sind.

3. Sägeseil nach Anspruch 1 oder 2,
**dadurch gekennzeichnet, dass**
die Seilenden (17a, 17b) mit axialer Beabstandung voneinander und/oder koaxial zueinander in einem Gussteil (20) aufgenommen sind.

4. Sägeseil nach einem der vorstehenden Ansprüche,
**dadurch gekennzeichnet, dass**
wenigstens eines der Seilenden (17a, 17b) gestaucht und/oder gepilzt ist, und/oder dass
wenigstens eines der Seilenden (17a, 17b) einen sich in Richtung der freien Endfläche (21a, 21b) des Seilendes (17a, 17b) radial erweiternden, vorzugsweise konischen, Halteabschnitt (23a, 23b) aufweist.

5. Sägeseil nach einem der vorstehenden Ansprüche,
**dadurch gekennzeichnet, dass**
das Sägeseil (11) ein Trägerseil und mehrere an dem Trägerseil angebrachte Trennelemente (12), insbesondere Schneidelemente, umfasst, wobei ein die Seilenden (17a, 17b) aufnehmendes Gussteil (20) bezogen auf die Seilachse (S) einen größten Außendurchmesser (D) und/oder eine Länge (L) aufweist, welche den größten Außendurchmesser bzw. die Länge der Trennelemente (12) nicht übersteigt, wobei insbesondere das Gussteil (20) eine abgerundete Form aufweist.

6. Sägeseil nach Anspruch 5,
**dadurch gekennzeichnet, dass**
die Trennelemente (12) in einem einheitlichen Arbeitsabstand (X) voneinander an dem Trägerseil angebracht sind, wobei der Abstand (Y) des Gussteils (20) zu den beiden benachbarten Trennelementen (12) jeweils zumindest im Wesentlichen und bevorzugt genau gleich dem Arbeitsabstand (X) ist.

7. Sägeseil nach einem der vorstehenden Ansprüche,
**dadurch gekennzeichnet, dass**
das Sägeseil (11) eine Struktur aus mehreren Einzelseilfasern aufweist und insbesondere eine oder mehrere Stahllitzen umfasst.

8. Sägevorrichtung, mit
einem Sägeseil (11) nach einem der vorstehenden Ansprüche, wenigstens einer motorisch antreibbaren Antriebsrolle (13), und zumindest einer von der Antriebsrolle (13) beabstandet angeordneten Umlenkrolle (15) für das Sägeseil (11),
wobei das Sägeseil (11) im Sägebetrieb um die Antriebsrolle (13) und die Umlenkrolle (15) umläuft.

9. Verfahren zum Herstellen eines Sägeseils (11), insbesondere eines Sägeseils gemäß einem der Ansprüche 1 bis 8, bei dem ein zum Trennen von Werkstücken ausgebildetes, zwei Seilenden (17a, 17b) umfassendes Ausgangsseil bereitgestellt und die Seilenden (17a, 17b) des Ausgangsseils zum Bilden einer geschlossenen Schleife miteinander verbunden werden,
**dadurch gekennzeichnet, dass**
die Seilenden (17a, 17b) zum Verbinden miteinander vergossen werden.

10. Verfahren nach Anspruch 9,
**dadurch gekennzeichnet, dass**
die Seilenden (17a, 17b) mittels Kunststoffguss, bevorzugt mittels eines Gießharzes, oder mittels Metallguss, insbesondere mittels Druck- und/oder Spritzguss, bevorzugt mittels Zinkdruckguss, miteinander vergossen werden.

11. Verfahren nach Anspruch 9 oder 10,
**dadurch gekennzeichnet, dass**
die Seilenden (17a, 17b) zum Vergießen mit einer axialen Beabstandung voneinander platziert werden,
wobei insbesondere die axiale Beabstandung der Seilenden (17a, 17b) durch einen axialen Abstand zwischen zwei, insbesondere den Seilenden (17a, 17b) jeweils nächstgelegenen, Trennelementen (12) des Ausgangsseils vorgegeben wird.

12. Verfahren nach einem der Ansprüche 9 bis 11,
**dadurch gekennzeichnet, dass**
die Seilenden (17a, 17b) zum Vergießen koaxial zueinander ausgerichtet werden, und/oder dass
die Seilenden (17a, 17b) zum Vergießen in eine Gießform (25) eingebracht werden.

13. Verfahren nach einem der Ansprüche 9 bis 12,
**dadurch gekennzeichnet, dass**
wenigstens ein Seilende (17a, 17b) vor dem Vergießen gestaucht und/oder gepilzt wird.

14. Gießform (25), insbesondere zum Durchführen eines Verfahrens nach einem der Ansprüche 9 bis 13, mit wenigstens einem Formkörper (27a), einer in dem Formkörper (27a) ausgebildeten Kavität (29) und einem zu der Kavität (29) führenden Angusskanal (31),
**dadurch gekennzeichnet, dass**
sich ausgehend von der Kavität (29) zwei Seildurchführungen (33) durch den Formkörper (27a) hindurch erstrecken.

15. Gießform nach Anspruch 14,
**dadurch gekennzeichnet, dass**
wenigstens eine der Seildurchführungen (33) einen Erweiterungshohlraum (35) zum Aufnehmen eines Trennelements (12) eines in die Gießform (25) einzubringenden Sägeseils (11) aufweist, wobei bevorzugt beide Seildurchführungen (33) einen Erweiterungshohlraum (35) zum Aufnehmen eines Trennelements (12) aufweisen und der axiale Abstand (Y) zur Kavität (29) jeweils einem einheitlichen Arbeitsabstand (X) der Trennelemente (12) entspricht.
